# EUROPEAN PATENT APPLICATION

(11) **EP 4 716 314 A1**
(43) Date of publication of application: **25.03.2026**
(21) Application number: 24835153.8
(22) Date of filing: 21.05.2024
(51) Int. Cl.: H04W 52/02

(54) **COMMUNICATION METHOD AND COMMUNICATION APPARATUS**

(30) Priority: 05.07.2023 CN 202310831032; 14.07.2023 CN 202310869521
(71) Applicant: Huawei Technologies Co., Ltd., Shenzhen, Guangdong 518129 (CN)
(72) Inventor: XUE, Yifan, Shenzhen, Guangdong 518129 (CN); XUE, Lixia, Shenzhen, Guangdong 518129 (CN)
(74) Representative: MERH-IP Matias Erny Reichl Hoffmann Patentanwälte PartG mbB
(86) International application number: PCT/CN2024/094545
(87) International publication number: WO 2025/007668

(57) **Abstract**

This application provides a communication method and a communication apparatus. The communication method provided in this application includes: An access network device sends first information to a terminal device, where the first information indicates the terminal device to skip monitoring a low-power wake-up signal within a first duration, or the first information indicates that there is no transmission of the low-power wake-up signal within the first duration, or the first information indicates that a resource of the low-power wake-up signal is unavailable within the first duration, and the low-power wake-up signal is used for waking up the terminal device; and correspondingly, the terminal device skips monitoring the low-power wake-up signal within the first duration after receiving the first information. According to the communication method, when the access network device uses a first frequency domain resource within the first duration for transmission of another signal other than the low-power wake-up signal, the terminal device is not woken up.

## Description

This application claims priority to Chinese Patent Application No. 202310831032.5, filed with the China National Intellectual Property Administration on July 5, 2023 and entitled "RESOURCE RESERVATION AND OCCUPATION METHOD AND APPARATUS", and to Chinese Patent Application No. 202310869521.X, filed with the China National Intellectual Property Administration on July 14, 2023 and entitled "COMMUNICATION METHOD AND COMMUNICATION APPARATUS", both of which are incorporated herein by reference in their entireties.

### TECHNICAL FIELD

This application relates to the communication field, and in particular, to a communication method and a communication apparatus.

### BACKGROUND

A terminal device may monitor, by using a separate low-power small circuit, a low-power wake-up signal (low-power wake-up signal, LP-WUS) sent by an access network device, and then obtain through demodulation wake-up information based on an information bit carried in the LP-WUS, to wake up a main receiver or a main receiving module that is turned off (or in a sleep state) in the terminal device.

Currently, the access network device configures, for the terminal device in a semi-static configuration manner, a frequency resource or a time-frequency resource used when the access network device sends the LP-WUS. For example, the access network device may configure, by using radio resource control (radio resource control, RRC) signaling, a start position of the frequency resource, a bandwidth of a WUS, and/or a time resource position that are used by the access network device for sending the LP-WUS.

However, whether the access network device sends the LP-WUS depends on whether there is a service requirement. If there is no service requirement within a period of time, the access network device does not send the LP-WUS, leading to a waste of resources configured for the LP-WUS. To avoid a waste of resources, a method is that when no LP-WUS is sent, a resource configured for an LP-WUS is used for transmission of another signal other than the LP-WUS. However, a problem that the terminal device is woken up incorrectly may occur.

### SUMMARY

This application provides a communication method and a communication apparatus, to avoid a problem that a terminal device is woken up when an access network device uses a resource configured for a low-power wake-up signal for transmission of another signal other than the LP-WUS.

According to a first aspect, this application provides a communication method. The communication method is applied to a terminal device, and includes: receiving first information from an access network device, where the first information indicates the terminal device to skip monitoring a low-power wake-up signal within a first duration, or the first information indicates that there is no transmission of the low-power wake-up signal within the first duration, or the first information indicates that a resource of the low-power wake-up signal is unavailable within the first duration, and the low-power wake-up signal is used for waking up the terminal device; and skipping monitoring the low-power wake-up signal within the first duration after receiving the first information.

In other words, in this embodiment, when determining that there is no transmission of the low-power wake-up signal within the first duration or that the resource of the low-power wake-up signal is unavailable within the first duration, the access network device sends, to the terminal device, the first information that indicates the terminal device to skip monitoring the low-power wake-up signal within the first duration. Correspondingly, the terminal device skips monitoring the low-power wake-up signal within the first duration after receiving the first information.

Alternatively, in this embodiment, when determining that there is no transmission of the low-power wake-up signal within the first duration or that the resource of the low-power wake-up signal is unavailable within the first duration, the access network device sends, to the terminal device, the first information indicating there is no transmission of the low-power wake-up signal within the first duration. Correspondingly, after receiving the first information, the terminal device may then learn that there is no transmission of the low-power wake-up signal within the first duration that is to come, and therefore skip monitoring the low-power wake-up signal within the first duration.

Alternatively, in this embodiment, when determining that there is no transmission of the low-power wake-up signal within the first duration or that the resource of the low-power wake-up signal is unavailable within the first duration, the access network device sends, to the terminal device, the first information indicating that the resource of the low-power wake-up signal is unavailable within the first duration. Correspondingly, the terminal device skips monitoring the low-power wake-up signal within the first duration after receiving the first information.

In this embodiment, that the terminal device skips monitoring the low-power wake-up signal within the first duration means that the terminal device skips monitoring the low-power wake-up signal on a first frequency domain resource within the first duration. The first frequency domain resource is a frequency domain resource that is configured for the access network device and that is used for transmission of the low-power wake-up signal.

It should be noted herein that a manner in which the access network device sends the first information to the terminal device is not limited in this embodiment.

For example, the first information is carried in a low-power synchronization signal.

For example, the first information is carried in the low-power wake-up signal.

When the first information is carried in the low-power synchronization signal, a specific carrying manner includes two implementations.

In a first implementation, the first information is an encoded bit, and the encoded bit is located after a synchronization sequence in the low-power synchronization signal.

In a second implementation, the first information is scrambled on a synchronization sequence in the low-power synchronization signal, where different synchronization sequences are obtained when different first information is scrambled.

It should be noted herein that a manner in which the first information specifically performs indication is not limited in this embodiment.

In a first implementation, the first duration is a duration pre-configured by the access network device for the terminal device.

In other words, in the first implementation, the access network device needs to pre-configure a duration for the terminal device. Correspondingly, the terminal device considers the configured duration as the first duration by default. In this way, each time the terminal device receives the first information sent by the access network device, the terminal device skips monitoring the low-power wake-up signal within the first duration after receiving the first information.

In a second implementation, the access network device pre-configures N durations for the terminal device, where N is a positive integer greater than 1; and the first information indicates the first duration, and the first duration is one of the N durations.

In other words, in the second implementation, the access network device first needs to pre-configure the N durations for the terminal device, and then the access network device determines one of the N durations as the first duration, and indicates the first duration by using the first information. Correspondingly, after receiving the first information sent by the access network device, the terminal device determines the first duration based on the first information, and then skips monitoring the low-power wake-up signal within the first duration after receiving the first information.

Optionally, for the first implementation and the second implementation, a duration that is configured within the first duration and that is used for transmission of the low-power wake-up signal is less than or equal to the first duration. For example, the access network device determines that there is no transmission of the low-power wake-up signal within 20 ms that is to come, but only 10 ms within the 20 ms that is to come is configured for transmission of the low-power wake-up signal, and the remaining 10 ms is not configured for transmission of the low-power wake-up signal. However, in this case, the access network device may still indicate to the terminal device that there is no need to monitor the low-power wake-up signal within the 20 ms (which may be considered as the first duration).

In a third implementation, when the terminal device is configured to non-continuously monitor the low-power wake-up signal, the first duration is determined based on a monitoring duration, and the monitoring duration is a duration in which the terminal device monitors the low-power wake-up signal.

In other words, if the access network device configures the terminal device to non-continuously monitor the low-power wake-up signal, or the access network device configures the terminal device to periodically monitor the low-power wake-up signal, or the access network device configures the terminal device to monitor the low-power wake-up signal in a duty-cycle based manner, after receiving the first information, the terminal device determines the first duration based on a pre-configured monitoring duration, and then skips monitoring the low-power wake-up signal within the first duration after receiving the first information. For example, when the terminal device is configured to non-continuously monitor the low-power wake-up signal, the first duration may be a monitoring duration by default, or the first duration may be a remaining duration within the current monitoring duration by default (that is, from an end moment of the first information to an end moment of the current monitoring duration).

It can be learned that in the communication method provided in this embodiment, when the access network device indicates, by using the first information, the terminal device to skip monitoring the low-power wake-up signal within the first duration, or indicates that there is no transmission of the low-power wake-up signal within the first duration, or that the resource of the low-power wake-up signal is unavailable within the first duration, the terminal device no longer monitors the LP-WUS within the first duration after receiving the first information. Therefore, even if the first frequency domain resource that is within the first duration and that is originally used for transmission of the low-power wake-up signal is used for transmission of a signal other than the low-power wake-up signal, a problem that the terminal device is woken up incorrectly within the first duration does not occur.

With reference to the first aspect, in a possible implementation, a first frequency domain resource within the first duration is used for transmission of a signal other than the low-power wake-up signal, and the first frequency domain resource is a frequency domain resource that is configured by the access network device and that is used for transmission of the low-power wake-up signal.

In other words, in this embodiment, the access network device uses the first frequency domain resource configured for the low-power wake-up signal for transmission of another non-low-power wake-up signal, for example, used for transmission of signals such as a physical downlink shared channel (physical downlink shared channel, PDSCH) signal and a channel state information-reference signal (channel state information-reference signal, CSI-RS).

It should be understood that, in this implementation, on the basis that the terminal device is not woken up incorrectly, problems of a waste of resources caused when no low-power wake-up signal is sent can be further reduced.

According to a second aspect, this application provides a communication method. The communication method is applied to an access network device, and includes: sending first information, where the first information indicates a terminal device to skip monitoring a low-power wake-up signal within a first duration, or the first information indicates that there is no transmission of the low-power wake-up signal within the first duration, or the first information indicates that a resource of the low-power wake-up signal is unavailable within the first duration, and the low-power wake-up signal is used for waking up the terminal device.

With reference to the second aspect, in a possible implementation, the first information is carried in a low-power synchronization signal, or the first information is carried in a low-power wake-up signal.

With reference to the second aspect, in a possible implementation, when the first information is carried in a low-power synchronization signal, the first information is an encoded bit, and the encoded bit is located after a synchronization sequence in the low-power synchronization signal; or the first information is scrambled on the synchronization sequence in the low-power synchronization signal, where different synchronization sequences are obtained when different first information is scrambled.

With reference to the second aspect, in a possible implementation, the first duration is a duration pre-configured by the access network device for the terminal device.

With reference to the second aspect, in a possible implementation, the access network device pre-configures N durations for the terminal device, where N is a positive integer greater than 1; and the first information indicates the first duration, and the first duration is one of the N durations.

With reference to the second aspect, in a possible implementation, the first duration is greater than a second duration, the second duration is a duration between a first moment and a second moment, the first moment is a moment at which the terminal device receives the first information, and the second moment is an end moment that is pre-configured by the access network device for the terminal device and that is used for transmission of the low-power wake-up signal.

With reference to the second aspect, in a possible implementation, when the terminal device is configured to non-continuously monitor the low-power wake-up signal, the first duration is determined based on a monitoring duration, and the monitoring duration is a duration in which the terminal device monitors the low-power wake-up signal.

With reference to the second aspect, in a possible implementation, a first frequency domain resource within the first duration is used for transmission of a signal other than the low-power wake-up signal, and the first frequency domain resource is a frequency domain resource that is configured by the access network device and that is used for transmission of the low-power wake-up signal.

According to a third aspect, this application provides a communication method, applied to a terminal device. An access network device pre-configures the terminal device to monitor a low-power wake-up signal on a first time-frequency resource. The method includes: determining whether a first signal transmitted on the first time-frequency resource is the low-power wake-up signal; and demodulating the first signal when determining that the first signal transmitted on the first time-frequency resource is the low-power wake-up signal.

It should be noted herein that a manner in which the terminal device determines whether the first signal transmitted on the first time-frequency resource is the low-power wake-up signal is not limited in this embodiment.

For example, in a possible implementation, when the low-power wake-up signal uses an on-off keying OOK modulation scheme, determining whether the first signal transmitted on the first time-frequency resource is the low-power wake-up signal includes: when a first value and a second value meet a first condition, determining that the first signal transmitted on the first time-frequency resource is the low-power wake-up signal, where the first value is determined based on energy values or amplitude values of M first OOK symbols in the first signal, and the second value is determined based on energy values or amplitude values of M second OOK symbols in the first signal; and different information bit is carried in the first OOK symbols and the second OOK symbols, and M is a positive integer.

In an example, the first value is a sum of the energy values of the M first OOK symbols, the second value is a sum of the energy values of the M second OOK symbols, and the first condition is that a ratio of the first value to the second value is greater than a first threshold.

For example, in a possible implementation, when the low-power wake-up signal uses a frequency shift keying FSK modulation scheme, determining whether the first signal transmitted on the first time-frequency resource is the low-power wake-up signal includes: when a third value and a fourth value meet a second condition, determining that the first signal transmitted on the first time-frequency resource is the low-power wake-up signal, where the third value is determined based on energy values or amplitude values of FSK symbols in the first signal at a first frequency position, and the fourth value is determined based on energy values or amplitude values of FSK symbols in the first signal at a second frequency position; and the first frequency position is different from the second frequency position, and different bit information is carried in different FSK symbols.

In an example, the third value is a sum of the energy values of the FSK symbols in the first signal at the first frequency position, the fourth value is a sum of the energy values of the FSK symbols in the first signal at the second frequency position, and the second condition is that a ratio of the third value to the fourth value is greater than a second threshold.

In other words, in the communication method provided in this embodiment, the terminal device demodulates the first signal only when determining that the first signal transmitted on the first time-frequency resource is the low-power wake-up signal. Alternatively, from another perspective, when determining that the first signal transmitted on the first time-frequency resource is not the low-power wake-up signal, the terminal device does not demodulate the first signal. Therefore, a problem that the terminal device is woken up incorrectly does not occur.

According to a fourth aspect, this application provides a communication apparatus. The communication apparatus is used in a terminal device, and includes: a transceiver module, configured to receive first information from an access network device, where the first information indicates the terminal device to skip monitoring a low-power wake-up signal within a first duration, or the first information indicates that there is no transmission of the low-power wake-up signal within the first duration, or the first information indicates that a resource of the low-power wake-up signal is unavailable within the first duration, and the low-power wake-up signal is used for waking up the terminal device; and a processing module, configured to skip monitoring the low-power wake-up signal within the first duration that is to come after the first information is received.

With reference to the fourth aspect, in a possible implementation, the first information is carried in a low-power synchronization signal, or the first information is carried in a low-power wake-up signal.

With reference to the fourth aspect, in a possible implementation, when the first information is carried in a low-power synchronization signal, the first information is an encoded bit, and the encoded bit is located after a synchronization sequence in the low-power synchronization signal; or the first information is scrambled on the synchronization sequence in the low-power synchronization signal, where different synchronization sequences are obtained when different first information is scrambled.

With reference to the fourth aspect, in a possible implementation, the first duration is a duration pre-configured by the access network device for the terminal device.

With reference to the fourth aspect, in a possible implementation, the access network device pre-configures N durations for the terminal device, where N is a positive integer greater than 1, the first information indicates the first duration, and the first duration is one of the N durations.

With reference to the fourth aspect, in a possible implementation, a duration that is configured within the first duration and that is used for transmission of the low-power wake-up signal is less than or equal to the first duration.

With reference to the fourth aspect, in a possible implementation, when the terminal device is configured to non-continuously monitor the low-power wake-up signal, the first duration is determined based on a monitoring duration, and the monitoring duration is a duration in which the terminal device monitors the low-power wake-up signal.

With reference to the fourth aspect, in a possible implementation, a first frequency domain resource within the first duration is used for transmission of a signal other than the low-power wake-up signal, and the first frequency domain resource is a frequency domain resource that is configured by the access network device and that is used for transmission of the low-power wake-up signal.

According to a fifth aspect, this application provides a communication apparatus. The communication apparatus is used in an access network device, and includes: a transceiver module, configured to send first information, where the first information indicates a terminal device to skip monitoring a low-power wake-up signal within a first duration, or the first information indicates that there is no transmission of the low-power wake-up signal within the first duration, or the first information indicates that a resource of the low-power wake-up signal is unavailable within the first duration, and the low-power wake-up signal is used for waking up the terminal device.

With reference to the fifth aspect, in a possible implementation, the first information is carried in a low-power synchronization signal, or the first information is carried in a low-power wake-up signal.

With reference to the fifth aspect, in a possible implementation, when the first information is carried in a low-power synchronization signal, the first information is an encoded bit, and the encoded bit is located after a synchronization sequence in the low-power synchronization signal; or the first information is scrambled on the synchronization sequence in the low-power synchronization signal, where different synchronization sequences are obtained when different first information is scrambled.

With reference to the fifth aspect, in a possible implementation, the first duration is a duration pre-configured by the access network device for the terminal device.

With reference to the fifth aspect, in a possible implementation, the access network device pre-configures N durations for the terminal device, where N is a positive integer greater than 1, the first information indicates the first duration, and the first duration is one of the N durations.

With reference to the fifth aspect, in a possible implementation, a duration that is configured within the first duration and that is used for transmission of the low-power wake-up signal is less than or equal to the first duration.

With reference to the fifth aspect, in a possible implementation, when the terminal device is configured to non-continuously monitor the low-power wake-up signal, the first duration is determined based on a monitoring duration, and the monitoring duration is a duration in which the terminal device monitors the low-power wake-up signal.

With reference to the fifth aspect, in a possible implementation, a first frequency domain resource within the first duration is used for transmission of a signal other than the low-power wake-up signal, and the first frequency domain resource is a frequency domain resource that is configured by the access network device and that is used for transmission of the low-power wake-up signal.

According to a sixth aspect, this application provides a communication apparatus. The communication apparatus is used in a terminal device. An access network device pre-configures the terminal device to monitor a low-power wake-up signal on a first time-frequency resource. The apparatus includes: a processing module, configured to: determine whether a first signal transmitted on the first time-frequency resource is the low-power wake-up signal; and demodulate the first signal when determining that the first signal transmitted on the first time-frequency resource is the low-power wake-up signal.

With reference to the sixth aspect, in a possible implementation, when the wake-up signal uses an on-off keying OOK modulation scheme, the processing module is specifically configured to: when a first value and a second value meet a first condition, determine that the first signal transmitted on the first time-frequency resource is the low-power wake-up signal, where the first value is determined based on energy values or amplitude values of M first OOK symbols in the first signal, and the second value is determined based on energy values or amplitude values of M second OOK symbols in the first signal; and different bit information is carried in the first OOK symbols and the second OOK symbols, and M is a positive integer.

With reference to the sixth aspect, in a possible implementation, the first value is a sum of the energy values of the M first OOK symbols, the second value is a sum of the energy values of the M second OOK symbols, and the first condition is that a ratio of the first value to the second value is greater than a first threshold.

With reference to the sixth aspect, in a possible implementation, when the low-power wake-up signal uses a frequency shift keying FSK modulation scheme, the processing module is specifically configured to: when a third value and a fourth value meet a second condition, determine that the first signal transmitted on the first time-frequency resource is the low-power wake-up signal, where the third value is determined based on energy values or amplitude values of FSK symbols in the first signal at a first frequency position, and the fourth value is determined based on energy values or amplitude values of FSK symbols in the first signal at a second frequency position; and the first frequency position is different from the second frequency position, and different bit information is carried in different FSK symbols in the FSK symbols.

With reference to the sixth aspect, in a possible implementation, the third value is a sum of the energy values of the FSK symbols in the first signal at the first frequency position, the fourth value is a sum of the energy values of the FSK symbols in the first signal at the second frequency position, and the second condition is that a ratio of the third value to the fourth value is greater than a second threshold.

According to a seventh aspect, this application provides a communication apparatus, including a memory and a processor. The memory is configured to store program instructions. The processor is configured to invoke the program instructions in the memory to perform the method according to any one of the first aspect, the second aspect, or the third aspect, or the possible implementations of the first aspect, the second aspect, or the third aspect.

According to an eighth aspect, this application provides a communication system, including the communication apparatus according to the third aspect and the communication apparatuses according to the fourth aspect and the fifth aspect.

According to a ninth aspect, this application provides a computer-readable medium. The computer-readable medium stores program code to be executed by a computer, and the program code includes instructions used for performing the method according to any one of the first aspect to the third aspect, or any one of the possible implementations of the first aspect to the third aspect.

According to a tenth aspect, this application provides a computer program product. The computer program product includes computer program code, and when the computer program code is run on a computer, the computer is caused to implement the method according to any one of the first aspect to the third aspect, or any one of the possible implementations of the first aspect to the third aspect.

For technical effects brought by any one of the implementations of the fourth aspect to the tenth aspect, refer to technical effects brought by any one of the first aspect to the third aspect, and any one of the possible implementations of the first aspect to the third aspect. Details are not described herein again.

### BRIEF DESCRIPTION OF DRAWINGS

FIG. 1 is a diagram of an application scenario according to this application;
FIG. 2 is a diagram of OOK modulation according to this application;
FIG. 3 is a diagram of FSK modulation according to this application;
FIG. 4 is a diagram of a frequency domain resource configured by an access network device according to this application;
FIG. 5 is a diagram of a time-frequency resource configured by an access network device according to this application;
FIG. 6 is a schematic flowchart of a communication method according to an embodiment of this application;
FIG. 7 is a diagram of determining a first duration according to an embodiment of this application;
FIG. 8 is a schematic flowchart of a communication method according to another embodiment of this application;
FIG. 9 is a diagram of a communication apparatus according to an embodiment of this application; and
FIG. 10 is a diagram of a communication apparatus according to another embodiment of this application.

### DESCRIPTION OF EMBODIMENTS

To clearly describe technical solutions in embodiments of this application, terms such as "first" and "second" are used in embodiments of this application to distinguish between same items or similar items that provide basically same functions or purposes. For example, first information and second information are merely used for distinguishing between different information, and do not limit a sequence of the first information and the second information. A person skilled in the art may understand that the terms such as "first" and "second" do not limit a quantity or an execution sequence, and the terms such as "first" and "second" do not indicate a definite difference.

It should be noted that, in this application, terms such as "example" or "for example" are used to represent giving an example, an illustration, or a description. Any embodiment or design scheme described as an "example" or "for example" in this application should not be explained as being more preferred or having more advantages than another embodiment or design scheme. Exactly, use of the terms such as "example" or "for example" is intended to present a related concept in a specific manner.

Embodiments of this application provide a communication method and apparatus. The method and the apparatus are based on a same technical concept. The method and the apparatus have similar problem-resolving principles. Therefore, mutual reference may be made to implementations of the apparatus and the method. Repeated parts are not described again.

The technical solutions provided in embodiments of this application may be applied to various communication systems. For example, the communication system to which the technical solutions are applied may be a global system for mobile communications (global system for mobile communications, GSM), a code division multiple access (code division multiple access, CDMA) system, a wideband code division multiple access (wideband code division multiple access, WCDMA) system, a long term evolution (long term evolution, LTE) system, a long term evolution advanced (LTE advanced, LTE-A) system, an LTE frequency division duplex (frequency division duplex, FDD) system, an LTE time division duplex (time division duplex, TDD) system, a universal mobile telecommunications system (universal mobile telecommunications system, UMTS), a fifth generation mobile communication system, and some future communication systems (for example, a sixth generation mobile communication system).

The following describes in detail embodiments of this application with reference to the accompanying drawings.

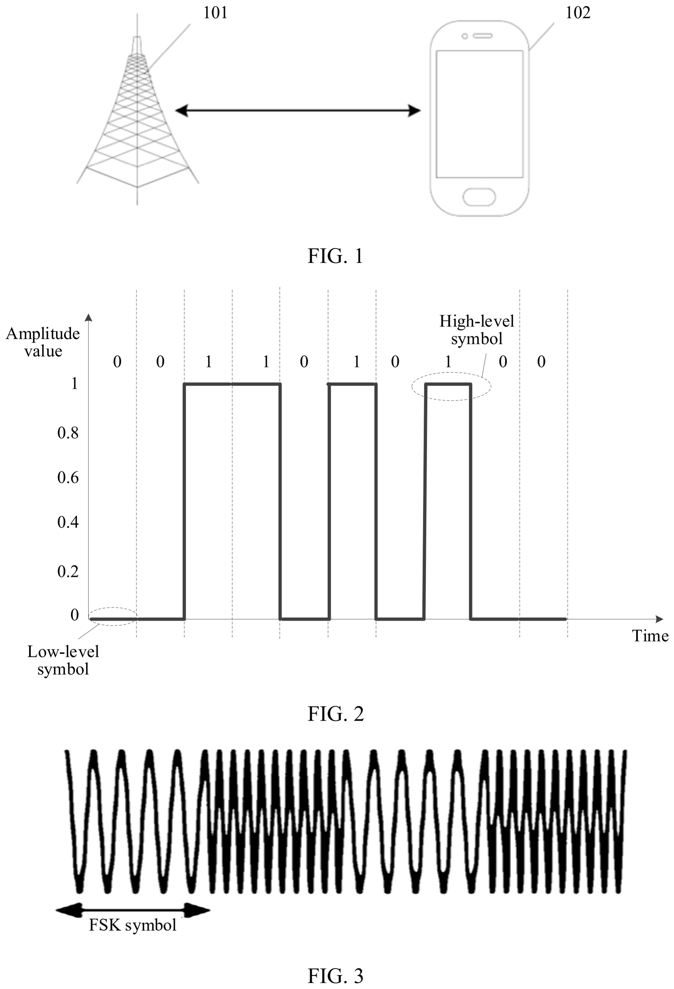

First, a communication system to which an embodiment of this application is applicable is described with reference to FIG. 1. FIG. 1 is a diagram of a communication system to which an embodiment of this application is applicable. As shown in FIG. 1, the communication system includes a network device 101 and a terminal device 102.

The network device 101 may be any device having a wireless transceiver function. The device includes but is not limited to an evolved NodeB (evolved NodeB, eNB or eNodeB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission reception point (transmission reception point, TRP), and the like. Alternatively, the device may be a gNB or a transmission point (TRP or TP) in a 5G system, for example, an NR system, or one antenna panel or a group of antenna panels (including a plurality of antenna panels) of a base station in a 5G system, or may be a network node, for example, a baseband unit (BBU) or a distributed unit (distributed unit, DU), that constitutes a gNB or a transmission point.

In some deployments, the gNB may include a central unit (central unit, CU) and a DU. The gNB may further include a radio unit (radio unit, RU). The CU implements some functions of the gNB, and the DU implements some functions of the gNB. For example, the CU implements functions of a radio resource control (radio resource control, RRC) layer and a packet data convergence protocol (packet data convergence protocol, PDCP) layer, and the DU implements functions of a radio link control (radio link control, RLC) layer, a media access control (media access control, MAC) layer, and a physical (physical, PHY) layer. Information at the RRC layer eventually becomes information at the physical layer, or is converted from information at the physical layer. Therefore, in this architecture, higher layer signaling, for example, RRC layer signaling, may also be considered as being sent by the DU or by the DU and the CU. It may be understood that the network device may be a CU node, a DU node, or a device including the CU node and the DU node. In addition, the CU may be classified as a network device in an access network (radio access network, RAN), or the CU may be classified as a network device in a core network (core network, CN). This is not limited in this application.

The terminal device 102 may be a device that provides voice and/or data connectivity for a user, for example, a handheld device having a wireless connection function or a vehicle-mounted device. The terminal device may also be referred to as user equipment (user equipment, UE), an access terminal (access terminal), a user unit (user unit), a user station (user station), a mobile station (mobile station), a mobile console (mobile console), a remote station (remote station), a remote terminal (remote terminal), mobile equipment (mobile equipment), a user terminal (user terminal), wireless telecom equipment (wireless telecom equipment), a user agent (user agent), or a user apparatus. The terminal device may be a station (station, STA) in a wireless local area network (wireless local area network, WLAN), or may be a cellular phone, a cordless phone, a session initiation protocol (session initiation protocol, SIP) phone, a wireless local loop (wireless local loop, WLL) station, a personal digital assistant (personal digital assistant, PDA) device, a handheld device having a wireless communication function, a computing device or another processing device connected to a wireless modem, a vehicle-mounted device, a wearable device, a terminal in a next-generation communication system (for example, a fifth generation (fifth generation, 5G) communication network), a terminal device in a future evolved public land mobile network (public land mobile network, PLMN), or the like. 5G may also be referred to as new radio (new radio, NR). In a possible application scenario of this application, the terminal device may alternatively be a terminal device that often operates on land, for example, a vehicle-mounted device. In this application, for ease of description, a chip deployed in the foregoing device, or a chip may also be referred to as a terminal device.

In this application, the network device and the terminal device may communicate with each other by using a licensed spectrum, an unlicensed spectrum, or both the licensed spectrum and the unlicensed spectrum. The network device and the terminal device may communicate with each other by using a spectrum below 6 gigahertz (gigahertz, GHz), a spectrum above 6 GHz, or both the spectrum below 6 GHz and the spectrum above 6 GHz. A spectrum resource used between the network device and the terminal device is not limited in embodiments of this application.

It may be understood that a quantity of terminal devices shown in FIG. 1 is merely an example, and a specific quantity of terminal devices does not constitute a limitation on this application.

It should be noted that in embodiments of this application, the terminal device or the network device includes a hardware layer, an operating system layer running over the hardware layer, and an application layer running over the operating system layer. The hardware layer includes hardware such as a central processing unit (central processing unit, CPU), a memory management unit (memory management unit, MMU), and a memory (also referred to as a main memory). An operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in embodiments of this application is not specifically limited in embodiments of this application, provided that communication can be performed according to the method provided in embodiments of this application by running a program that records code of the method provided in embodiments of this application. For example, the method provided in embodiments of this application may be performed by a terminal device or a network device, or may be performed by a functional module that is in the terminal device or the network device and that can invoke and execute a program.

In addition, methods in aspects of this application may be implemented through programming, and a computer program that can be accessed by a computer-readable component, carrier, or medium is formed. For example, the computer-readable medium may include but is not limited to: a magnetic storage component (for example, a hard disk drive, a floppy disk, or a magnetic tape), an optical disc (for example, a compact disc (compact disc, CD), or a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to a radio channel, and various other media that can store, contain, and/or carry instructions and/or data.

In the communication system shown in FIG. 1, regardless of whether the terminal device receives paging in an idle (idle) state/inactive (inactive) state or receives data in a connected state, a main receiver (also referred to as a main circuit) in the terminal device may be used to complete these functions. In this embodiment, that the terminal device receives a signal by using the main receiver is also referred to as operating on a main link, or is also referred to as that the main receiver is in an operating state. It may be understood that the main circuit (or the main receiver) is merely a name for differentiation, and a specific name of the main circuit (or the main receiver) does not limit the protection scope of this application. For ease of description, the main circuit is uniformly used for description below.

A signal received by the terminal device by using the main circuit may be referred to as being transmitted on the main link. The main link represents a connection relationship between the terminal device and the network device, and is a logical concept rather than a physical entity. It may be understood that the main link is merely a name for differentiation, and a specific name of the main link does not limit the protection scope of this application.

To reduce power consumption of the terminal device, the terminal device may receive a paging-related message by using a separate low-power small circuit. The low-power small circuit may be implemented by using a separate small circuit with a simple structure or a chip, and has low power consumption. For example, the low-power small circuit may be referred to as wake-up radio (wake-up radio, WUR), a wake-up circuit, a low-power circuit, or a wake-up receiver (wake-up receiver, WUR). A name of the low-power small circuit is not limited in this application. In this application, for ease of description, the low-power small circuit is referred to as a wake-up circuit. It may be understood that the wake-up circuit is merely a name for differentiation, and a specific name of the wake-up circuit does not limit the protection scope of this application. For ease of description, the wake-up circuit is uniformly used for description below.

A signal received by a WUR module is referred to as a low-power wake-up signal (low-power wake-up signal, LP-WUS). The LP-WUS may be used for waking up at least one terminal device or at least one group of terminal devices. To be specific, when the terminal device monitors an LP-WUS sent by the network device, a main receiver or a main receiving module that is turned off (or in a sleep state) in the terminal device is woken up. In this embodiment, that the terminal device receives the LP-WUS by using the WUR module is also referred to as operating on a WUR link, or is also referred to as that the WUR module is in an operating state.

For example, when the terminal device is in an idle (idle) state/inactive (inactive) state, the LP-WUS may be used for carrying paging-related information. Specifically, paging is classified into two types:
(1) Paging received by the terminal device in the idle state is referred to as core network paging (CN paging). In this case, the paging is initiated by a core network, and a terminal device identifier (UE ID) of the paged terminal device is sent to a base station that needs to send paging information. In this case, the UE ID is a temporary mobile subscription identifier (temporary mobile subscription identifier, TMSI), for example, a 5G-S-TMSI with a length of 48 bits.
(2) Paging received by the terminal device in the inactive state is referred to as access network paging (RAN paging). In this case, the paging is initiated by a base station that is specifically a last serving gNB, that is, a base station corresponding to a cell in which the terminal device is located when the terminal device changes from an RRC connected state to the inactive state. The last serving gNB sends a UE ID of the paged terminal device to a base station that needs to send paging information. In this case, the UE ID is, for example, an I-RNTI, and the I-RNTI is allocated by the last serving cell and has a length of 40 bits.

Specifically, to reduce power consumption of an LP-WUS module, when the network device sends the LP-WUS to the terminal device, the LP-WUS usually uses some simple modulation methods such as on-off keying (on-off keying, OOK).

For example, when modulation is performed based on the OOK, an information bit 1 is represented by using a high level, and an information bit 0 is represented by using a low level. Alternatively, an information bit 1 is represented by using a low level, and an information bit 0 is represented by using a high level. The high level and the low level may be considered as two symbols that represent different information bits and are respectively referred to as a high-level symbol and a low-level symbol (also collectively referred to as an OOK symbol) in this application.

For example, assuming that a wake-up signal is 0011010100, when modulation is performed by using the OOK, if a high-level symbol represents an information bit 1, and a low-level symbol represents an information bit 0, as shown in FIG. 2, the wake-up signal corresponds to a low-level symbol, a low-level symbol, a high-level symbol, a high-level symbol, a low-level symbol, a high-level symbol, a low-level symbol, a high-level symbol, a low-level symbol, and a low-level symbol.

Correspondingly, when the LP-WUS is modulated in an OOK manner, the WUR module in the terminal device receives the LP-WUS in an envelope detection manner. Specifically, when the WUR module demodulates the received LP-WUS, a threshold may be set. In a length of an OOK symbol, if a power (or a signal amplitude) of a received signal is greater than the threshold, a received information bit is considered as 1; or if a power (or a signal amplitude) of a received signal is less than the threshold, a received information bit is considered as 0.

However, in the foregoing method, if the specified threshold is not appropriate, a probability of demodulation errors increases. To resolve this problem, in a manner, Manchester (Manchester) encoding is used. For example, through Manchester encoding, an original information bit "0" is encoded as "10", and an original information bit "1" is encoded as "01". Then, when sending a signal, a transmit end uses two OOK symbols to send 1-bit original information. For example, the original information bit "0" corresponds to a high-level symbol and then a low-level symbol, and the original information bit "1" corresponds to a low-level symbol and then a high-level symbol. Correspondingly, when demodulating a Manchester encoded signal, a receive end may compare relative values of signal powers (or signal amplitudes) in two adjacent OOK symbols. If a signal power (or a signal amplitude) in a former OOK symbol is greater than a signal power (or a signal amplitude) in a latter OOK symbol, a received information bit is considered as "0". Otherwise, the received information bit is considered as "1". In this manner, an absolute threshold may not be selected for determining.

Alternatively, the LP-WUS may be modulated by using frequency shift keying (frequency shift keying, FSK). When the FSK is used for modulation, different frequencies are used for different information. For example, 2FSK may carry 1-bit information. When an information bit is 0, information may be sent on a frequency f0, and no information is sent on a frequency f1; or when an information bit is 1, information may be sent on a frequency f1, and no information is sent on a frequency f0. It is assumed that f0<f1, and a waveform of an FSK signal whose information is 0101 is shown in FIG. 3. In a 1^{st} FSK symbol and a 3^{rd} FSK symbol, a frequency of the signal is low, and in a 2^{nd} FSK symbol and a 4^{th} FSK symbol, a frequency of the signal is high. When demodulating the signal, the receive end may compare powers on f0 and f1 to determine whether the sent information bit is 0 or 1.

In addition, the FSK can further support a higher modulation order to carry more information. For example, 4FSK may carry 2-bit information. When information bits are 00, information may be sent on a frequency f0, and no information is sent on frequencies f1, f2, and f3; when information bits are 01, information may be sent on a frequency f1, and no information is sent on frequencies f0, f2, and f3; when information bits are 10, information may be sent on a frequency f2, and no information is sent on frequencies f0, f1, and f3; or when information bits are 11, information may be sent on a frequency f3, and no information is sent on frequencies f0, f1, and f2. Similarly, the receive end may compare powers on a plurality of frequencies to determine the transmitted information bit.

For the communication system shown in FIG. 1, currently, the network device indicates, to the terminal device in a semi-static configuration manner, a frequency resource or a time-frequency resource used for transmission of the LP-WUS. Correspondingly, the LP-WUS is monitored on the time-frequency resource corresponding to the terminal device.

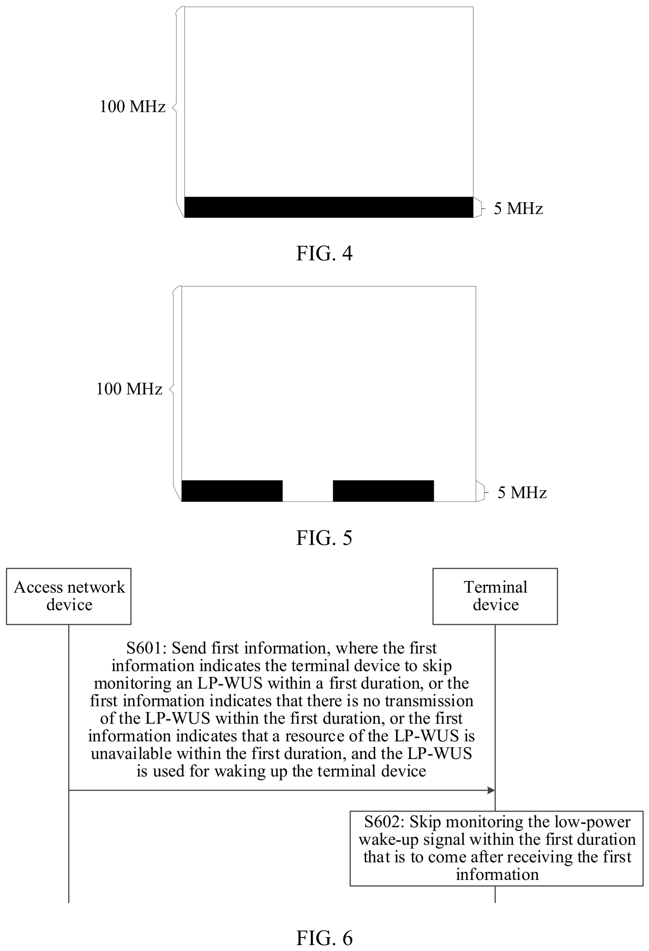

For example, if the access network device configures, for the terminal device, the LP-WUS to occupy only some frequency resources of one carrier, for example, as shown in FIG. 4, assuming that a bandwidth of the carrier is 100 MHz, the access network device may configure a bandwidth of the LP-WUS to 5 MHz. Correspondingly, the WUR module in the terminal device is always turned on, and monitors, at all possible time positions for transmission of the LP-WUS, the LP-WUS transmitted in the bandwidth of 5 MHz.

For example, the access network device configures both a frequency resource used for transmission of the LP-WUS and a time position used for transmission of the LP-WUS. For example, as shown in FIG. 5, a black part in the figure is a resource configured for the LP-WUS to use, and a remaining part is a resource used for transmission of another signal other than the LP-WUS. Correspondingly, when monitoring the LP-WUS, the terminal device performs monitoring only at all time positions that are configured by the access network device and that are used for transmission of the LP-WUS.

For example, the access network device configures a frequency resource used for transmission of the LP-WUS, and at least one of a monitoring periodicity, a monitoring offset, and monitoring duration of the LP-WUS. Correspondingly, that the terminal device periodically monitors the LP-WUS is also referred to as that the terminal device monitors the LP-WUS in a duty-cycle based manner, or is also referred to as that the terminal device non-continuously monitors the LP-WUS.

However, whether a network side sends the LP-WUS depends on whether there is a service requirement. If there is no service requirement within a period of time, the network side does not send the LP-WUS. It should be understood that in this case, the resource configured for the LP-WUS is wasted from a system perspective.

Therefore, to avoid a waste of resources, a method is that when no LP-WUS is sent, a resource configured for the LP-WUS is used for transmission of another signal other than the LP-WUS. However, this causes a further problem: As described above, the LP-WUS uses a simple modulation scheme, for example, OOK/FSK. After receiving the LP-WUS, the terminal device may determine carried bit information by comparing energy values at different moments or frequency positions. However, when the resource configured for the LP-WUS is used for transmission of another signal other than the LP-WUS, because the another signal also carries energy, the terminal device can also obtain through demodulation some information from the signal. In this case, a problem that the terminal device is woken up incorrectly may occur.

In view of this, this application provides a communication method and a communication apparatus, to avoid a problem that a terminal device is woken up when an access network device uses a resource configured for a low-power wake-up signal for transmission of another signal other than the LP-WUS.

With reference to FIG. 6, the following describes a communication method provided in this application. As shown in FIG. 6, the method includes the following steps.

S601: An access network device sends first information to a terminal device, and correspondingly, the terminal device receives the first information. The first information indicates the terminal device to skip monitoring a low-power wake-up signal within a first duration, or the first information indicates that there is no transmission of the low-power wake-up signal within the first duration, or the first information indicates that a resource of the low-power wake-up signal is unavailable within the first duration, and the low-power wake-up signal is used for waking up the terminal device.

S602: The terminal device skips monitoring the low-power wake-up signal within the first duration that is to come after receiving the first information.

As described above, after the access network device configures a frequency domain resource or a time-frequency resource used by the LP-WUS, there may be a case in which a network side does not send the LP-WUS. It should be understood that, when the access network device configures a resource (the frequency domain resource and/or the time-frequency resource) used for transmission of the LP-WUS but the network side does not send the LP-WUS on the resource, a waste of resources is caused from a communication system perspective. In addition, from a terminal perspective, because the terminal device does not learn that the access network device does not send the LP-WUS on the resource, the terminal device still monitors the LP-WUS on the resource, leading to high power consumption of the terminal device.

Therefore, in this embodiment, when the access network device determines that there is no transmission of the LP-WUS, the access network device sends the first information to the terminal device. The first information indicates any one of the following: Monitoring of the LP-WUS is not performed within the first duration, there is no transmission of the LP-WUS within the first duration, or the resource of the LP-WUS is unavailable within the first duration. Correspondingly, the terminal device skips monitoring the low-power wake-up signal within the first duration after receiving the first information.

In other words, in this embodiment, when determining that there is no transmission of the LP-WUS within the first duration or that the resource of the LP-WUS is unavailable within the first duration, the access network device sends, to the terminal device, the first information that indicates the terminal device to skip monitoring the LP-WUS within the first duration. Correspondingly, the terminal device skips monitoring the LP-WUS within the first duration after receiving the first information.

Alternatively, in this embodiment, when determining that there is no transmission of the LP-WUS within the first duration or that the resource of the LP-WUS is unavailable within the first duration, the access network device sends, to the terminal device, the first information indicating that there is no transmission of the LP-WUS within the first duration. Correspondingly, after receiving the first information, the terminal device may then learn that there is no transmission of the LP-WUS within the first duration that is to come, and therefore skips monitoring the LP-WUS within the first duration.

Alternatively, in this embodiment, when determining that there is no transmission of the LP-WUS within the first duration or that the resource of the LP-WUS is unavailable within the first duration, the access network device sends, to the terminal device, the first information indicating that the resource of the LP-WUS is unavailable within the first duration. Correspondingly, the terminal device skips monitoring the LP-WUS within the first duration after receiving the first information.

In this embodiment, that the terminal device skips monitoring the low-power wake-up signal within the first duration means that the terminal device skips monitoring the low-power wake-up signal on a first frequency domain resource within the first duration. The first frequency domain resource is a frequency domain resource that is configured for the access network device and that is used for transmission of the low-power wake-up signal.

It should be noted herein that a manner in which the terminal device determines a start position of the first duration is not limited in this embodiment.

For example, the start position of the first duration is a start position of the first information.

For another example, the start position of the first duration is a start position of a next time unit after a time unit occupied by the first information. The time unit may be, for example, a symbol, a subframe, a frame, or an LP-WUS occasion (occasion).

It should be noted herein that, in this embodiment, a manner in which the first information from the access network device specifically indicates that monitoring of the LP-WUS is not performed within the first duration, or that there is no transmission of the LP-WUS within the first duration, or that the resource of the LP-WUS is unavailable within the first duration is not limited.

In a first implementation, the first duration is a duration pre-configured by the access network device for the terminal device. For example, a duration T1 is pre-configured by using RRC signaling (for example, SIB information). Correspondingly, each time the terminal device receives the first information sent by the access network device, then the terminal device skips monitoring the LP-WUS within the T1 that is to come.

In a second implementation, the access network device may pre-configure N durations for the terminal device, where N is a positive integer greater than 1, and then indicate one of the N durations by using the first information.

In other words, the access network device may pre-configure the N durations for the terminal device, and then indicate one of the N durations by using the first information. The duration indicated by the first information may be considered as the first duration.

In an example of the second implementation, assuming that the first information is p bits, and the p bits may indicate 2*^{P}* durations, the access network device may pre-configure 2*^{P}* durations by using RRC signaling (for example, SIB information), and then indicate, by using different values of the p bits, a duration selected from the 2*^{P}* durations. For example, it is assumed that the first information is 2 bits. In this case, the access network device may pre-configure four durations T1, T2, T3, and T4 by using RRC signaling. Then, when the first information is 01, it may be considered that it indicates the terminal device to skip monitoring the LP-WUS within the duration T2, or it may be considered that it indicates to the terminal device that there is no transmission of the LP-WUS within the duration T2, or it may be considered that it indicates to the terminal device that the resource of the LP-WUS is unavailable within the duration T2. Correspondingly, after receiving the first information 01, the terminal device determines that the first duration is T2, and then skips monitoring the LP-WUS within the duration T2 after receiving the first information.

Optionally, for the first implementation and the second implementation, the first duration includes a duration configured for transmission of the LP-WUS. In other words, a duration that is configured within the first duration and that is used for transmission of the LP-WUS is less than or equal to the first duration.

For example, the access network device determines that there is no transmission of the low-power wake-up signal within 20 ms that is to come, but only 10 ms within the 20 ms that is to come is configured for transmission of the LP-WUS, and the remaining 10 ms is not configured for the low-power wake-up signal. However, in this case, the access network device may still indicate to the terminal device that there is no need to monitor the low-power wake-up signal within the 20 ms (which may be considered as the first duration).

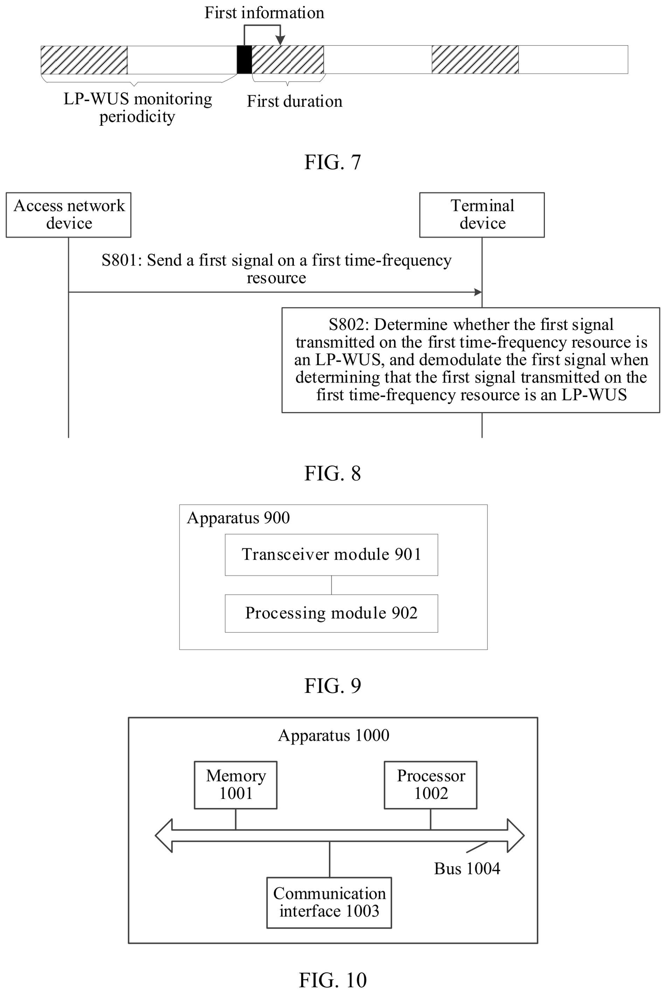

In a third implementation, this implementation is applicable to a scenario in which the access network device configures the terminal device to non-continuously monitor the LP-WUS. As described above, the terminal device may be configured to non-continuously monitor the LP-WUS, that is, the terminal device periodically monitors the LP-WUS. In this application, a duration occupied by the terminal device to monitor the LP-WUS in each periodicity when the LP-WUS is periodically monitored is also referred to as a monitoring duration. In this case, the first duration may be the monitoring duration by default. Alternatively, as shown in FIG. 7, the first duration may be a remaining duration within the current monitoring duration by default (that is, from an end moment of the first information to an end moment of the current monitoring duration).

In other words, in the third implementation, if the terminal device periodically monitors the LP-WUS, when the access network device determines that there is no LP-WUS in a period of time that is to come, the access network device sends the first information to the terminal device, where the first information indicates that there is no LP-WUS within the first duration that is to come. Correspondingly, after receiving the first information, the terminal device considers by default that the first duration is the current monitoring duration or the remaining duration within the current monitoring duration, and then skips monitoring the LP-WUS within a subsequent monitoring duration or the remaining duration.

It should be noted herein that a specific manner in which the access network device sends the first information to the terminal device is not limited in this embodiment.

For example, when the first information is sent, in one manner, the first information may be carried in a low-power synchronization signal (low-power synchronization signal, LP-SS) and sent to the terminal device.

The LP-SS is a synchronization signal that can be used by a WUR module, and may be used by the WUR module to perform time-frequency synchronization, or may be used by the WUR module to perform radio resource management (radio resource management, RRM) measurement. For example, the LP-SS may be periodically sent. Specifically, the LP-SS includes at least one particular synchronization sequence, and the WUR module may correct a time offset/frequency offset based on the sequence.

When the first information is carried in the LP-SS in a specific implementation, there are two carrying manners.

In a first carrying manner, the first information is an encoded bit located after the synchronization sequence.

In other words, several encoded bits may be attached after the synchronization sequence of the LP-SS. The several encoded bits are the first information indicating that monitoring of the LP-WUS is not performed within the first duration, or that there is no transmission of the LP-WUS within the first duration, or that the resource of the LP-WUS is unavailable within the first duration.

In an example, when the first duration is a duration pre-configured by the access network device for the terminal device, the first information may be, for example, one encoded bit. For example, when the one encoded bit is a bit 0, it is considered that it indicates that monitoring of the LP-WUS is not performed within the first duration, or that there is no transmission of the LP-WUS within the first duration, or that the resource of the LP-WUS is unavailable within the first duration, or when the one encoded bit is a bit 1, it is considered that it indicates that monitoring of the LP-WUS is not performed within the first duration, or that there is no transmission of the LP-WUS within the first duration, or that the resource of the LP-WUS is unavailable within the first duration.

In another example, when the first duration is one of 2*^{P}* durations pre-configured by the access network device for the terminal device, the first information may be, for example, p encoded bits, and different values of the p encoded bits corresponds to different durations in the 2*^{P}* duration.

In a second carrying manner, the first information is carried in a synchronization sequence of the LP-SS in a scrambling manner. Different synchronization sequences are obtained when different first information is scrambled, in other words, different first information may correspond to different synchronization sequences. In this carrying manner, after receiving the LP-SS, the terminal device may determine the first information by detecting a specific synchronization sequence.

For example, it is assumed that the first information is 1 bit. In this case, the first information may correspond to two different synchronization sequences. Then, the access network device may send one of the two synchronization sequences each time. Correspondingly, the terminal device determines the sent first information by detecting the synchronization sequence sent by the access network device.

For example, it is assumed that the first information is p bits. In this case, the first information may correspond to 2*^{P}* different synchronization sequences. Then, the access network device may send one of the 2*^{P}* synchronization sequences each time. Correspondingly, the terminal device determines the first information by detecting the synchronization sequence sent by the access network device.

To be specific, when the LP-SS is used for carrying the first information for indication, if the carrying manner in which the first information is the encoded bit located after the synchronization sequence is used, the carrying manner may be considered as an explicit indication manner. If the first information is carried in the synchronization sequence of the LP-SS in the scrambling manner, the scrambling manner may be considered as an implicit indication manner.

In this embodiment, when the first information is sent, in another manner, the first information may be carried in the LP-WUS and sent to the terminal device.

For example, in addition to information indicating a to-be-woken-up terminal device or terminal device group, the LP-WUS further includes the first information.

For another example, the LP-WUS may have a plurality of different formats, and the first information may be carried by using an LP-WUS in a specific format. For example, an LP-WUS in a format 1 carries wake-up information, and an LP-WUS in a format 2 carries the first information.

It can be learned that in the communication method provided in this embodiment, when the access network device indicates, by using the first information, the terminal device to skip monitoring the low-power wake-up signal within the first duration, or that there is no transmission of the low-power wake-up signal within the first duration, or that the resource of the low-power wake-up signal is unavailable within the first duration, the terminal device no longer monitors the LP-WUS within the first duration after receiving the first information, so that the terminal device is not woken up incorrectly within the first duration, to reduce power consumption of the terminal device.

In an optional embodiment, based on the embodiment described in FIG. 2, the first frequency domain resource within the first duration may be further used for transmission of a signal other than the low-power wake-up signal, where the first frequency domain resource is a frequency domain resource that is configured by the access network device and that is used for transmission of the LP-WUS.

In other words, in this embodiment, within the first duration, the access network device no longer performs transmission of the LP-WUS on the first frequency domain resource configured for the LP-WUS, but performs transmission of a signal other than the LP-WUS on the first frequency domain resource. The signal is also referred to as another non-LP-WUS signal in this application. In other words, in this embodiment, the first frequency domain resource configured by the access network device for the LP-WUS is used for transmission of the another non-LP-WUS signal.

It should be understood that, in this implementation, on the basis that the terminal device is not woken up incorrectly, problems of a waste of resources caused when no LP-WUS is sent can be further reduced.

With reference to FIG. 4 to FIG. 7, the foregoing describes the method in which the network side sends the first information to indicate the terminal device to skip monitoring the LP-WUS within the first duration, so that the terminal device is not woken up incorrectly. With reference to FIG. 8, the following further provides a method for not waking up a terminal device incorrectly.

As shown in FIG. 8, the method includes the following steps.

S801: An access network device sends a first signal to a terminal device on a first time-frequency resource.

In this embodiment, the first time-frequency resource is a resource that is configured by the access network device for the terminal device and that is used for transmission of an LP-WUS.

It should be understood that, herein, the access network device configures only the resource used for transmission of the LP-WUS. However, whether the first signal actually transmitted on the first time-frequency resource is the LP-WUS is determined by the access network device. In other words, in this embodiment, although the access network device configures, for the terminal device, a time-frequency resource for transmission of the LP-WUS as the first time-frequency resource, the access network device may not perform transmission of the LP-WUS on the first time-frequency resource.

S802: The terminal device determines whether the first signal transmitted on the first time-frequency resource is the LP-WUS, and demodulates the first signal when determining that the first signal transmitted on the first time-frequency resource is an LP-WUS.

As described above, a modulation scheme used for the LP-WUS is usually a simple modulation scheme, for example, OOK modulation or FSK modulation.

For the OOK modulation, some of a plurality of OOK symbols included in one LP-WUS carries energy, and the other OOK symbols do not carry energy. Therefore, there is an energy difference between the OOK symbols. Further, when Manchester encoding is used, one of every two OOK symbols carries energy, and the other OOK symbol does not carry energy. Therefore, there is an energy difference between the two symbols. For the FSK modulation, only one of different frequency positions has signal energy. Therefore, there is an energy difference between the different frequency positions. In other words, for the LP-WUS, an energy difference between different OOK symbols or different frequency positions is large.

However, if a sent signal is another signal other than the LP-WUS, for example, a physical downlink shared channel (physical downlink shared channel, PDSCH) signal or a channel state information-reference signal (channel state information-reference signal, CSI-RS), a modulation scheme based on quadrature amplitude modulation (quadrature amplitude modulation, QAM) is usually used, or a constant envelope signal is generated based on a specific sequence. In this case, on different OOK symbols or at different frequency positions, energy values of signals are approximate and do not differ greatly.

Therefore, based on a feature that an energy difference of the LP-WUS on different OOK symbols or at different frequency positions is large, and energy values of other signals on different OOK symbols or at different frequency positions are approximate, when receiving the first signal on the first time-frequency resource by using a WUR module, the terminal device first determines whether the first signal transmitted on the first time-frequency resource is the LP-WUS or another signal.

It should be noted herein that a manner in which the terminal device determines whether the first signal transmitted on the first time-frequency resource is the low-power wake-up signal is not limited in this embodiment.

For example, in a first implementation solution, if the LP-WUS uses the OOK modulation scheme, the terminal device may determine, by determining whether a first value and a second value meet the first condition, whether the first signal transmitted on the first time-frequency resource is the LP-WUS or the another signal.

Specifically, in the first implementation solution, the first value is determined based on energy values or amplitude values of M first OOK symbols in the first signal, and the second value is determined based on energy values or amplitude values of M second OOK symbols in the first signal.

Specifically, different bit information is carried in the first OOK symbol and the second OOK symbol, and M is a positive integer. For example, an information bit 1 is carried in the first OOK symbol, and an information bit 0 is carried in the second OOK symbol. Alternatively, an information bit 0 is carried in the first OOK symbol, and an information bit 1 is carried in the second OOK symbol. Specifically, the bit information herein is encoded bit information.

In other words, in the first implementation solution, the terminal device processes the energy values or the amplitude values of the M first OOK symbols to obtain the first value, processes the energy values or the amplitude values of the M second OOK symbols to obtain the second value, and then determines, depending on whether the first value and the second value meet the first condition, whether the first signal transmitted on the first time-frequency resource is the LP-WUS.

For example, M is greater than 1. In this case, the first value is obtained by summing up the energy values of the M first OOK symbols, and the second value is obtained by summing up the energy values of the M second OOK symbols. Then, whether the first signal is the LP-WUS or the another signal is determined by determining a relationship between a ratio of the first value to the second value and a preset threshold, or whether the first signal is the LP-WUS or the another signal is determined by determining a relationship between a difference between the first value and the second value and a preset threshold.

For another example, M is greater than 1. In this case, the first value is obtained by calculating a weighted sum of the energy values of the M first OOK symbols, and the second value is obtained by calculating a weighted sum of the energy values of the M second OOK symbols. Then, whether the first signal is an LP-WUS or the another signal is determined by determining a relationship between a ratio of the first value to the second value and a preset threshold, or whether the first signal is the LP-WUS or the another signal is determined by determining a relationship between a difference between the first value and the second value and a preset threshold.

For another example, M is greater than 1. In this case, the first value is obtained by first taking logarithms of the energy values or the amplitude values of the M first OOK symbols and then summing up the logarithms, and the second value is obtained by first taking logarithms of the energy values or the amplitude values of the M second OOK symbols and then summing up the logarithms. Then, whether the first signal is the LP-WUS or the another signal is determined by determining a relationship between a ratio of the first value to the second value and a preset threshold, or whether the first signal is the LP-WUS or the another signal is determined by determining a relationship between a difference between the first value and the second value and a preset threshold.

Optionally, M is 1. In this case, the first value is an energy value or an amplitude value of one first OOK symbol in the first signal, and the second value is an energy value or an amplitude value of one second OOK symbol in the first signal. It should be understood that, in this case, whether the first signal is the LP-WUS or the another signal may be determined by determining whether a ratio of the energy value of the first OOK symbol to the energy value of the second OOK symbol or a difference between the energy value of the first OOK symbol and the energy value of the second OOK symbol meets a preset condition, or whether the first signal is the LP-WUS or the another signal may be determined by determining whether a ratio of the amplitude value of the first OOK symbol to the amplitude value of the second OOK symbol or a difference between the amplitude value of the first OOK symbol and the amplitude value of the second OOK symbol meets a preset condition.

For ease of understanding, for example, assuming in OOK modulation using Manchester encoding, there is definitely one high-level symbol and one low-level symbol between each pair of adjacent OOK symbols (that is, it may be considered that each pair of adjacent OOK symbols includes one first OOK symbol and one second OOK symbol). In this case, when demodulating the received first signal, the terminal device may compare an energy difference or an energy ratio of a pair of OOK symbols. The terminal device considers that the received first signal is the LP-WUS, only when the difference or the ratio is greater than the preset threshold. Alternatively, to avoid interference of noise to the determining, joint processing may be performed on a plurality of pairs of adjacent OOK symbols in the first signal to determine whether the first signal is the LP-WUS. For example, assuming that one LP-WUS includes 48 encoded bits, and assuming in OOK modulation using Manchester encoding, the LP-WUS includes 48 OOK symbol pairs. Energy of high-energy symbols in the 48 OOK symbol pairs may be summed up (denoted as E1), energy of low-energy symbols in the 48 OOK symbol pairs may be summed up (denoted as E2), and finally, a relationship between a ratio of E1 to E2 and the preset threshold is calculated, to determine whether the first signal is an LP-WUS signal.

For example, in a second implementation solution, if the low-power wake-up signal uses the FSK modulation scheme, the terminal device may determine, by determining whether a third value and a fourth value meet a second condition, whether the first signal transmitted on the first time-frequency resource is the LP-WUS or the another signal.

Specifically, in the second implementation solution, the third value is determined based on energy values or amplitude values of FSK symbols in the first signal at a first frequency position, and the fourth value is determined based on energy values or amplitude values of FSK symbols in the first signal at a second frequency position. The first frequency position is different from the second frequency position, and different bit information is carried in different FSK symbols.

In other words, in the second implementation solution, the terminal device processes the energy values or the amplitude values of the FSK symbols at the first frequency position to obtain the third value, processes the energy values or the amplitude values of the FSK symbols at the second frequency position to obtain the fourth value, and then determines, depending on whether the third value and the fourth value meet the second condition, whether the first signal transmitted on the first time-frequency resource is the LP-WUS.

For example, the third value is obtained by summing up the energy values of the FSK symbols at the first frequency position, and the fourth value is obtained by summing up the energy values of the FSK symbols at the second frequency position. Then, if a ratio of the third value to the fourth value or a difference between the third value and the fourth value is greater than a preset threshold, it is considered that the first signal is the LP-WUS.

For example, the third value is obtained by summing up the amplitude values of the FSK symbols at the first frequency position, and the fourth value is obtained by summing up the amplitude values of the FSK symbols at the second frequency position. Then, if a ratio of the third value to the fourth value or a difference between the third value and the fourth value is greater than a preset threshold, it is considered that the first signal is the LP-WU.

Optionally, the energy values or the amplitude values of the FSK symbols at the first frequency position are greater than energy values at other K-1 frequency positions, the energy values or the amplitude values of the FSK symbols at the second frequency position are greater than energy values at other K-2 frequency positions and are less than the energy values at the first frequency position, and K is a quantity of frequencies used when the FSK modulation is used.

In other words, in this implementation, the third value is obtained based on energy values of the FSK symbols at a frequency position with the highest energy, and the fourth value is obtained based on energy values of the FSK symbols at a frequency position with the second highest energy. Alternatively, the third value is obtained based on amplitude values of the FSK symbols at a frequency position with the highest amplitude, and the fourth value is obtained based on amplitude values of the FSK symbols at a frequency position with the second highest amplitude.

In an example, in a specific implementation, the third value may be, for example, a sum of the energy values of the FSK symbols at the frequency position with the highest energy, and the fourth value is a sum of the energy values of the FSK symbols at the frequency position with the second highest energy. Then, if a ratio of the third value to the fourth value or a difference between the third value and the fourth value is greater than the preset threshold, it is considered that the transmitted first signal is the LP-WUS.

In an example, in a specific implementation, the third value may be, for example, a sum of the amplitude values of the FSK symbols at the frequency position with the highest amplitude, and the fourth value is a sum of the amplitude values of the FSK symbols at the frequency position with the second highest amplitude. Then, if a ratio of the third value to the fourth value or a difference between the third value and the fourth value is greater than the preset threshold, it is considered that the transmitted first signal is the LP-WUS.

It should be noted that, in this implementation, a reason for comparing the two frequency positions with the highest energy and the second highest energy, or the two frequency positions with the highest amplitude and the second highest amplitude is as follows: Frequency-selective fading usually exists on a channel. Even if a sent signal has same energy at different frequency positions, energy received at the different frequency positions at a receive end varies. In this case, comparing two frequency positions with the highest energy instead of all frequency positions can reduce impact of the frequency-selective fading to some extent.

Optionally, the third value is obtained based on energy values of the FSK symbols at a frequency position with the highest energy, and the fourth value is obtained based on energy values of the FSK symbols at a frequency position with the lowest energy. Alternatively, the third value is obtained based on amplitude values of the FSK symbols at a frequency position with the highest amplitude, and the fourth value is obtained based on amplitude values of the FSK symbols at a frequency position with the lowest amplitude.

In an example, in a specific implementation, the third value may be, for example, a sum of the energy values of the FSK symbols at the frequency position with the highest energy, and the fourth value is a sum of the energy values of the FSK symbols at the frequency position with the lowest energy. Then, if a ratio of the third value to the fourth value or a difference between the third value and the fourth value is greater than the preset threshold, it is considered that the transmitted first signal is the LP-WUS.

In an example, in a specific implementation, the third value may be, for example, a sum of the amplitude values of the FSK symbols at the frequency position with the highest amplitude, and the fourth value is a sum of the amplitude values of the FSK symbols at the frequency position with the lowest amplitude. Then, if a ratio of the third value to the fourth value or a difference between the third value and the fourth value is greater than the preset threshold, it is considered that the transmitted first signal is the LP-WUS.

Optionally, the third value is obtained based on energy values of the FSK symbols at a frequency position with the highest energy and energy values of the FSK symbols at a frequency position with the second highest energy, and the fourth value is obtained based on energy values of the FSK symbols at a frequency position with the lowest energy and energy values of the FSK symbols at a frequency position with the second lowest energy. Alternatively, the third value is obtained based on amplitude values of the FSK symbols at a frequency position with the highest amplitude and amplitude values of the FSK symbols at a frequency position with the second highest amplitude, and the fourth value is obtained based on amplitude values of the FSK symbols at a frequency position with the lowest amplitude and amplitude values of the FSK symbols at a frequency position with the second lowest amplitude.

In an example, in a specific implementation, the third value may be, for example, a sum of first energy values corresponding to the FSK symbols, and the fourth value may be, for example, a sum of second energy values corresponding to the FSK symbols. The first energy value corresponding to each FSK symbol is equal to a sum of an energy value of the FSK symbol at a frequency position with the highest energy and an energy value of the FSK symbol at a frequency position with the second highest energy, and the second energy value corresponding to each FSK symbol is equal to a sum of an energy value of the FSK symbol at a frequency position with the lowest energy and an energy value of the FSK symbol at a frequency position with the second lowest energy. Then, if a ratio of the third value to the fourth value or a difference between the third value and the fourth value is greater than the preset threshold, it is considered that the transmitted first signal is the LP-WUS.

In the communication method provided in this embodiment, the terminal device demodulates the first signal only when determining that the first signal transmitted on the first time-frequency resource is the low-power wake-up signal. Alternatively, from another perspective, when the terminal device determines that the first signal transmitted on the first time-frequency resource is not the low-power wake-up signal, the terminal device does not demodulate the first signal. Therefore, a problem that the terminal device is woken up incorrectly does not occur.

The foregoing describes in detail the communication methods in embodiments of this application with reference to FIG. 5 to FIG. 8. The following describes in detail communication apparatuses in embodiments of this application with reference to FIG. 9 and FIG. 10.

FIG. 9 is a diagram of a structure of a communication apparatus according to an embodiment of this application. Specifically, as shown in FIG. 9, the apparatus 900 includes a transceiver module 901 and a processing module 902.

In a first embodiment, the communication apparatus is used in a terminal device.

Specifically, in the first embodiment, the transceiver module 901 is configured to receive first information from an access network device, where the first information indicates the terminal device to skip monitoring a low-power wake-up signal within a first duration, or the first information indicates that there is no transmission of the low-power wake-up signal within the first duration, or the first information indicates that a resource of the low-power wake-up signal is unavailable within the first duration, and the low-power wake-up signal is used for waking up the terminal device; and the processing module 902 is configured to skip monitoring the low-power wake-up signal within the first duration after the first information is received.

In a possible implementation, the first information is carried in a low-power synchronization signal, or the first information is carried in a low-power wake-up signal.

In a possible implementation, when the first information is carried in a low-power synchronization signal, the first information is an encoded bit, and the encoded bit is located after a synchronization sequence in the low-power synchronization signal; or the first information is scrambled on the synchronization sequence in the low-power synchronization signal, where different synchronization sequences are obtained when different first information is scrambled.

In a possible implementation, the first duration is a duration pre-configured by the access network device for the terminal device.

In a possible implementation, the access network device pre-configures N durations for the terminal device, where N is a positive integer greater than 1, the first information indicates the first duration, and the first duration is one of the N durations.

In a possible implementation, a duration that is configured within the first duration and that is used for transmission of the low-power wake-up signal is less than or equal to the first duration.

In a possible implementation, when the terminal device is configured to non-continuously monitor the low-power wake-up signal, the first duration is determined based on a monitoring duration, and the monitoring duration is a duration in which the terminal device monitors the low-power wake-up signal.

In a possible implementation, a first frequency domain resource within the first duration is used for transmission of a signal other than the low-power wake-up signal, and the first frequency domain resource is a frequency domain resource that is configured by the access network device and that is used for transmission of the low-power wake-up signal.

In a second embodiment, the apparatus 900 may be used in an access network device.

Specifically, the transceiver module 901 is configured to send first information, where the first information indicates a terminal device to skip monitoring a low-power wake-up signal within a first duration, or the first information indicates that there is no transmission of the low-power wake-up signal within the first duration, or the first information indicates that a resource of the low-power wake-up signal is unavailable within the first duration, and the low-power wake-up signal is used for waking up the terminal device.

In a possible implementation, the first information is carried in a low-power synchronization signal, or the first information is carried in a low-power wake-up signal.

In a possible implementation, when the first information is carried in a low-power synchronization signal, the first information is an encoded bit, and the encoded bit is located after a synchronization sequence in the low-power synchronization signal; or the first information is scrambled on the synchronization sequence in the low-power synchronization signal, where different synchronization sequences are obtained when different first information is scrambled.

In a possible implementation, the first duration is a duration pre-configured by the access network device for the terminal device.

In a possible implementation, the access network device pre-configures N durations for the terminal device, where N is a positive integer greater than 1, the first information indicates the first duration, and the first duration is one of the N durations.

In a possible implementation, a duration that is configured within the first duration and that is used for transmission of the low-power wake-up signal is less than or equal to the first duration.

In a possible implementation, when the terminal device is configured to non-continuously monitor the low-power wake-up signal, the first duration is determined based on a monitoring duration, and the monitoring duration is a duration in which the terminal device monitors the low-power wake-up signal.

In a possible implementation, a first frequency domain resource within the first duration is used for transmission of a signal other than the low-power wake-up signal, and the first frequency domain resource is a frequency domain resource that is configured by the access network device and that is used for transmission of the low-power wake-up signal.

In a third embodiment, the communication apparatus may be used in a terminal device. An access network device pre-configures the terminal device to monitor a low-power wake-up signal on a first time-frequency resource.

Specifically, in the third embodiment, the processing module 902 is configured to: determine whether a first signal transmitted on the first time-frequency resource is the low-power wake-up signal; and demodulate the first signal when determining that the first signal transmitted on the first time-frequency resource is the low-power wake-up signal.

In a possible implementation, when the wake-up signal uses an on-off keying OOK modulation scheme, the processing module 902 is specifically configured to: when a first value and a second value meet a first condition, determine that the first signal transmitted on the first time-frequency resource is the low-power wake-up signal, where the first value is determined based on energy values or amplitude values of M first OOK symbols in the first signal, and the second value is determined based on energy values or amplitude values of M second OOK symbols in the first signal; and different bit information is carried in the first OOK symbols and the second OOK symbols, and M is a positive integer.

In a possible implementation, the first value is a sum of the energy values of the M first OOK symbols, the second value is a sum of the energy values of the M second OOK symbols, and the first condition is that a ratio of the first value to the second value is greater than a first threshold.

In a possible implementation, when the low-power wake-up signal uses a frequency shift keying FSK modulation scheme, the processing module 902 is specifically configured to: when a third value and a fourth value meet a second condition, determine that the first signal transmitted on the first time-frequency resource is the low-power wake-up signal, where the third value is determined based on energy values or amplitude values of FSK symbols in the first signal at a first frequency position, and the fourth value is determined based on energy values or amplitude values of FSK symbols in the first signal at a second frequency position; and the first frequency position is different from the second frequency position, and different bit information is carried in different FSK symbols in the FSK symbols.

In a possible implementation, the third value is a sum of the energy values of the FSK symbols in the first signal at the first frequency position, the fourth value is a sum of the energy values of the FSK symbols in the first signal at the second frequency position, and the second condition is that a ratio of the third value to the fourth value is greater than a second threshold.

FIG. 10 is a diagram of a structure of a communication apparatus according to another embodiment of this application. The apparatus shown in FIG. 10 may be configured to perform the method in any one of the foregoing embodiments.

As shown in FIG. 10, the apparatus 1000 in this embodiment includes a memory 1001 and a processor 1002. Optionally, the apparatus 1000 further includes a communication interface 1003 and a bus 1004. The memory 1001, the processor 1002, and the communication interface 1003 are communicatively connected to each other through the bus 1004.

The memory 1001 may be a read-only memory (read-only memory, ROM), a static storage device, a dynamic storage device, or a random access memory (random access memory, RAM). The memory 1001 may store a program. When the program stored in the memory 1001 is executed by the processor 1002, the processor 1002 is configured to perform steps of the methods shown in FIG. 6 to FIG. 8.

The processor 1002 may be a general-purpose central processing unit (central processing unit, CPU), a microprocessor, an application-specific integrated circuit (application-specific integrated circuit, ASIC), or one or more integrated circuits, and is configured to execute a related program, to implement the methods shown in FIG. 6 to FIG. 8 in this application.

The processor 1002 may alternatively be an integrated circuit chip having a signal processing capability. In an implementation process, the steps of the methods in FIG. 6 to FIG. 8 in embodiments of this application may be completed by using an integrated logic circuit of hardware in the processor 1002 or by using instructions in a form of software.

The processor 1002 may be a general-purpose processor, a digital signal processor (digital signal processor, DSP), an application specific integrated circuit (ASIC), a field programmable gate array (field programmable gate array, FPGA) or another programmable logic device, a discrete gate or transistor logic device, or a discrete hardware component. The methods, the steps, and logical block diagrams that are disclosed in embodiments of this application may be implemented or performed. The general-purpose processor may be a microprocessor, or the processor may be any conventional processor or the like.

The steps of the methods disclosed with reference to embodiments of this application may be directly performed and completed by a hardware decoding processor, or may be performed and completed by using a combination of hardware and software modules in the decoding processor. A software module may be located in a mature storage medium in the art, for example, a random access memory, a flash memory, a read-only memory, a programmable read-only memory, an electrically erasable programmable memory, or a register. The storage medium is located in the memory 1001. The processor 1002 reads information in the memory 1001, and completes, in combination with hardware of the processor 1002, functions that need to be performed by units included in the apparatus in this application. For example, the processor 1002 may perform steps/functions in embodiments shown in FIG. 6 to FIG. 8.

The communication interface 1003 may use a transceiver apparatus, for example, but not limited to, a transceiver, to implement communication between the apparatus 1000 and another device or a communication network.

The bus 1004 may include a path for information transmission between components (for example, the memory 1001, the processor 1002, and the communication interface 1003) of the apparatus 1000.

It should be understood that the apparatus 1000 shown in this embodiment of this application may be an electronic device, or may be a chip configured in the electronic device. The apparatus 1000 may be deployed in a terminal device, or may be deployed in a network device.

All or some of the foregoing embodiments may be implemented by using software, hardware, firmware, or any combination thereof. When software is used to implement the foregoing embodiments, all or some of the foregoing embodiments may be implemented in a form of a computer program product. The computer program product includes one or more computer instructions or computer programs. When the computer instructions or the computer program is loaded or executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by a computer, or a data storage device, for example, a server or a data center, integrating one or more usable media. The usable medium may be a magnetic medium (for example, a floppy disk, a hard disk drive, or a magnetic tape), an optical medium (for example, a DVD), or a semiconductor medium. The semiconductor medium may be a solid-state drive.

It should be understood that the term "and/or" in this specification describes only an association relationship between associated objects and indicates that three relationships may exist. For example, A and/or B may indicate the following three cases: Only A exists, both A and B exist, and only B exists, where A and B may be singular or plural. In addition, the character "/" in this specification usually indicates an "or" relationship between the associated objects, but may also indicate an "and/or" relationship. For details, refer to the context for understanding.

In this application, "at least one" means one or more, and "a plurality of" means two or more. "At least one of the following items (pieces)" or a similar expression thereof means any combination of these items, including a singular item (piece) or any combination of plural items (pieces). For example, at least one of a, b, or c may indicate: a, b, c, a and b, a and c, b and c, or a, b, and c, where a, b, and c may be singular or plural.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, reference may be made to a corresponding process in the foregoing method embodiments. Details are not described herein again.

In the several embodiments provided in this application, it should be understood that the disclosed system, apparatus, and method may be implemented in other manners. For example, the foregoing apparatus embodiments are merely examples. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to a conventional technology, or some of the technical solutions may be implemented in the form of a software product. The computer software product is stored in a storage medium, and includes a plurality of instructions for indicating a computer device (which may be a personal computer, a server, a network device, or the like) to perform all or a part of the steps of the methods described in embodiments of this application. The foregoing storage medium includes any medium that can store program code, for example, a USB flash disk, a removable hard disk, a read-only memory, a random access memory, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, applied to a terminal device, and comprising:
receiving first information from an access network device, wherein the first information indicates the terminal device to skip monitoring a low-power wake-up signal within a first duration, or the first information indicates that there is no transmission of the low-power wake-up signal within the first duration, or the first information indicates that a resource of the low-power wake-up signal is unavailable within the first duration, and the low-power wake-up signal is used for waking up the terminal device; and
skipping monitoring the low-power wake-up signal within the first duration after receiving the first information.

2. The method according to claim 1, wherein the first information is carried in a low-power synchronization signal, or the first information is carried in a low-power wake-up signal.

3. The method according to claim 2, wherein when the first information is carried in a low-power synchronization signal, the first information is an encoded bit, and the encoded bit is located after a synchronization sequence in the low-power synchronization signal; or
the first information is scrambled on a synchronization sequence in the low-power synchronization signal, wherein different synchronization sequences are obtained when different first information is scrambled.

4. The method according to any one of claims 1 to 3, wherein the first duration is a duration pre-configured by the access network device for the terminal device.

5. The method according to any one of claims 1 to 3, wherein the access network device pre-configures N durations for the terminal device, wherein N is a positive integer greater than 1; and
the first information indicates the first duration, and the first duration is one of the N durations.

6. The method according to claim 4 or 5, wherein a duration that is configured within the first duration and that is used for transmission of the low-power wake-up signal is less than or equal to the first duration.

7. The method according to any one of claims 1 to 3, wherein when the terminal device is configured to non-continuously monitor the low-power wake-up signal, the first duration is determined based on a monitoring duration, and the monitoring duration is a duration in which the terminal device monitors the low-power wake-up signal.

8. The method according to any one of claims 1 to 7, wherein a first frequency domain resource within the first duration is used for transmission of a signal other than the low-power wake-up signal, and the first frequency domain resource is a frequency domain resource that is configured by the access network device and that is used for transmission of the low-power wake-up signal.

9. A communication method, applied to an access network device, and comprising:
sending first information, wherein the first information indicates a terminal device to skip monitoring a low-power wake-up signal within a first duration, or the first information indicates that there is no transmission of the low-power wake-up signal within the first duration, or the first information indicates that a resource of the low-power wake-up signal is unavailable within the first duration, and the low-power wake-up signal is used for waking up the terminal device.

10. The method according to claim 9, wherein the first information is carried in a low-power synchronization signal, or the first information is carried in a low-power wake-up signal.

11. The method according to claim 9, wherein when the first information is carried in a low-power synchronization signal,
the first information is an encoded bit, and the encoded bit is located after a synchronization sequence in the low-power synchronization signal; or
the first information is scrambled on a synchronization sequence in the low-power synchronization signal, wherein different synchronization sequences are obtained when different first information is scrambled.

12. The method according to any one of claims 9 to 11, wherein the first duration is a duration pre-configured by the access network device for the terminal device.

13. The method according to any one of claims 9 to 11, wherein the access network device pre-configures N durations for the terminal device, wherein N is a positive integer greater than 1; and
the first information indicates the first duration, and the first duration is one of the N durations.

14. The method according to claim 12 or 13, wherein a duration that is configured within the first duration and that is used for transmission of the low-power wake-up signal is less than or equal to the first duration.

15. The method according to any one of claims 9 to 11, wherein when the terminal device is configured to non-continuously monitor the low-power wake-up signal, the first duration is determined based on a monitoring duration, and the monitoring duration is a duration in which the terminal device monitors the low-power wake-up signal.

16. The method according to any one of claims 9 to 15, wherein a first frequency domain resource within the first duration is used for transmission of a signal other than the low-power wake-up signal, and the first frequency domain resource is a frequency domain resource that is configured by the access network device and that is used for transmission of the low-power wake-up signal.

17. A communication apparatus, wherein the apparatus comprises a module configured to perform the method according to any one of claims 1 to 8.

18. A communication apparatus, wherein the apparatus comprises a module configured to perform the method according to any one of claims 9 to 16.

19. A communication apparatus, comprising a processor, wherein the processor is coupled to a memory;
the memory is configured to store program instructions; and
the processor is configured to invoke the program instructions in the memory to perform the method according to any one of claims 1 to 8 or claims 9 to 16.

20. A computer-readable medium, wherein the computer-readable medium stores program code to be executed by a computer, and the program code comprises instructions used for performing the method according to any one of claims 1 to 8 or claims 9 to 16.

21. A computer program product, wherein the computer program product comprises computer program code, and when the computer program code is run on a computer, the computer is caused to perform the method according to any one of claims 1 to 8 or claims 9 to 16.
